# EUROPEAN PATENT SPECIFICATION

(11) **EP 1 638 263 B1**
(45) Date of publication and mention of the grant of the patent: **09.01.2008**
(21) Application number: 04255700.9
(22) Date of filing: 18.09.2004
(51) Int. Cl.: H04L 12/56

(54) **Automatic setting method for ATM network**
Verfahren zur automatischen Einstellung für ein ATM-Netzwerk
Procédé de réglage automatique pour un réseau ATM

(43) Date of publication of application: 22.03.2006
(73) Proprietor: ZyXEL Communications Corporation, Hsin-Chu, Taiwan (TW)
(72) Inventor: Weng, Ming-Chuan, Sinpu Township. Hsinchu County 305 (TW); Chen, Chi-Wen, Hsinchu City 300 (TW)
(74) Representative: Viering, Jentschura & Partner

(56) References cited:
- WO-A-02/41578
- US-A1- 2004 052 263

## Description

### 1. Field of the invention NEWPORT

The present invention relates to an automatic setting method for ATM network at office site, especially to an automatic setting method used in an xDSL device for setting virtual path identifier (VPI)/virtual channel identifier (VCI) and encapsulation capacity at ISP office site.

### 2. Description of the Prior Art

The rapid progress of computer network expedites the development of various network protocols. Among them, the asynchronous transfer mode (ATM) protocol in ADSL network is very attractive.

In conventional network, the transmission medium is shared by all communication terminals connected to the network and the data is sent through the transmission medium. Each of the communication terminals should be able to check whether the network is idle. In other word, the communication terminal must hold transmitted data when other communication terminal is transmitting data and then send data when the network is idle. The ATM protocol is developed to achieve point to point connection by switch, and the terminals in source end and destination end can use whole bandwidth of the transmission medium at the same time.

The data in current computer network is transmitted in packet form with different sizes. The packets with different sizes may also have different time delay. The time delay is difficult to estimate as network becomes more and more complicated.

The time delay problem becomes more serious when more and more video files and graphic files are transmitted through network. The time delay impacts the network as interference noise. Moreover, the variable-sized packet incurs difficulty to transmission of graphic and voice data.

ATM network overcome above-mentioned drawback by adopting small-sized and fixed-length packet for data transmission, this small packet is referred as cell. ATM network uses cell to enhance transmission rate, and reduce time delay and delay variation.

The conventional network implements the data link layer with hardware address. The hardware address is exclusive to an independent machine and there is no simple algorithm to resolve destination address by network system. Therefore, the source end just sends data to routing devices such as router and the delivery path of data is determined by network layer in OSI architecture.

However, the routing processed in the network layer will cause much computation effort. Therefore, the router will be the bottleneck of network transmission if the processor thereof is not such powerful.

Moreover, the router will examine each packet to determine its delivery path. After the source end and the destination end have already established connection, the router still needs to examine each packet between the source end and the destination end, even though the all the packets are transmitted through the same path between the source end and the destination end.

To address this issue, the ATM network solves routing problem by virtual connection, wherein the packets (cells) through a fixed path will not be examined again. In virtual connection, the path between two terminal ends is established by the first packet and then the data transmission between the two ends is directly managed by switch.

However, the ATM network is not completed complied with LAN infrastructure. For example, certain important fields are very important in cell frame of ATM such as Virtual Path Identifier (VPI), Virtual Channel Identifier (VCI), Payload Type (PT) and Cell Loss Priority (CLP) etc. The ATM switch used VPI/VCI field to guide the cell to desired output port.

The delivery path of the cell can be easily determined by VPI/VCI field because the VPI/VCI field has small bit size. The cells with the same VCI will be delivered through a virtual channel, and the cells with the same VPI will be delivered through a virtual path.

However, the ATM network is not completed complied with LAN infrastructure, the ISP offices in different locations or different countries may have different cell format. For example, the VPI/VCI field format in Taipei ISP office may be different to the VPI/VCI field format in Beijing ISP office. Moreover, the encapsulation capacity in Taipei ISP office may be different to the encapsulation capacity in Beijing ISP office. Therefore, the ATM switch should be setup by ISP administrator. The modem of xDSL subscriber can only be used for switches associated with the same ISP office. For example, the xDSL modem for switch in DC ISP office cannot be directly moved for switch in New York ISP office.

US Patent number 2004/052263 A1 (XU HAIBO), 18 March 2004, discloses an automatic detection of the virtual circuit setting and encapsulation type of a DSL line. The object of US 2004/052263 is to automatically detect the correct DSL virtual circuit setting and encapsulation type and to determine whether a DSL line is using PPPOA encapsulation.

### SUMMARY OF THE INVENTION

It is an object of the present invention to provide an automatic setting method to set up the setting parameters including VPI, VCI and encapsulation capacity for ATM network. The information device such as xDSL modem using the automatic setting method according to the present invention can be freely moved to other remote places or foreign countries without the need of reinstallation.

To achieve above object, the present invention provides an automatic setting method for ATM network. The method is used in an information device for automatic connecting to an ATM network of an ISP office.

The method comprises following steps. At first an automatic configuration table is provided and includes a plurality sets of setting parameters of virtual path identifier (VPI)/virtual channel identifier (VCI) and encapsulation capacity for a plurality of default ISP offices. The user tries connection to the office by selecting one set of the setting parameters as a connecting parameter to the ISP office and receives a reply message from the ISP office. The user selects another one set of the setting parameters as a connecting parameter to the ISP office when the connection fails and tries again until the connection to the ISP office successes.

The above summaries are intended to illustrate exemplary embodiments of the invention, which will be best understood in conjunction with the detailed description to follow, and are not intended to limit the scope of the appended claims.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
**Fig. 1** is a schematic diagram of an ATM network according to the present invention;
**Fig. 2** is a flowchart of setting-up method according to the present invention;
**Fig. 3** shows a connecting message on computer monitor according to the present invention;
**Fig. 4** shows successful log in message on computer monitor according to the present invention;
**Fig. 5** shows PPPoE/PPPoA setting on computer monitor according to the present invention; and
**Fig. 6** shows connecting failure screen on computer monitor according to the present invention.

### DETAILED DESCRIPTION OF THE INVENTION

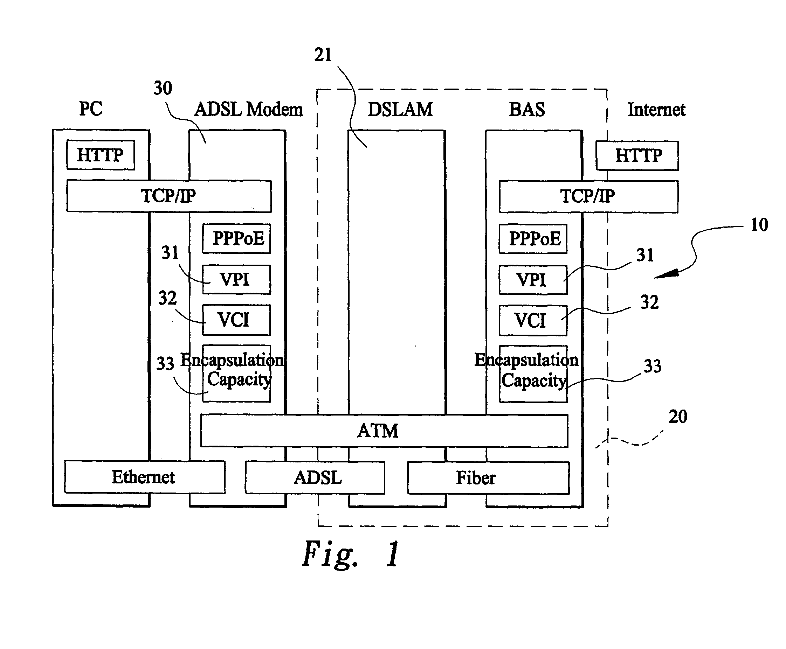

**Fig. 1** is a schematic diagram of an ATM network according to the present invention, wherein the ATM network **10** is, for example, an ATM-based WAN. The ATM-based WAN can use broadband dial up technology such as ADSL. An ISP office **20** generally comprises at least one ATM switch **21** such as a digital subscriber line access multiplexer (DSLAM) for accessing an ADSL unit **30.** Through the ATM switch **21,** the data of ISP office **20** can be transmitted to the ATM network **10** through multiple paths designated by Virtual Path Identifier (VPI) **31** and Virtual Channel Identifier (VCI) **32.**

In the present invention, the setting parameters including VPI **31,** VCI **32** and encapsulation capacity **33** of the ISP office **20** are automatically set in an information device **30** such as xDSL modem, router, gateway, IP sharing or wireless access point (WAP). Therefore, the ISP administrator needs not to set different setting parameters in the information device **30** for different ATM networks.

The information device **30** according to the present invention can be freely moved to any desired ATM-based network without reinstallation. For example, when the ADSL modem is moved from Taiwan to US, an automatic configuration setting according to the present invention can set up the ADSL modem automatically. All the user has to do is just apply ADSL service to local ISP office.

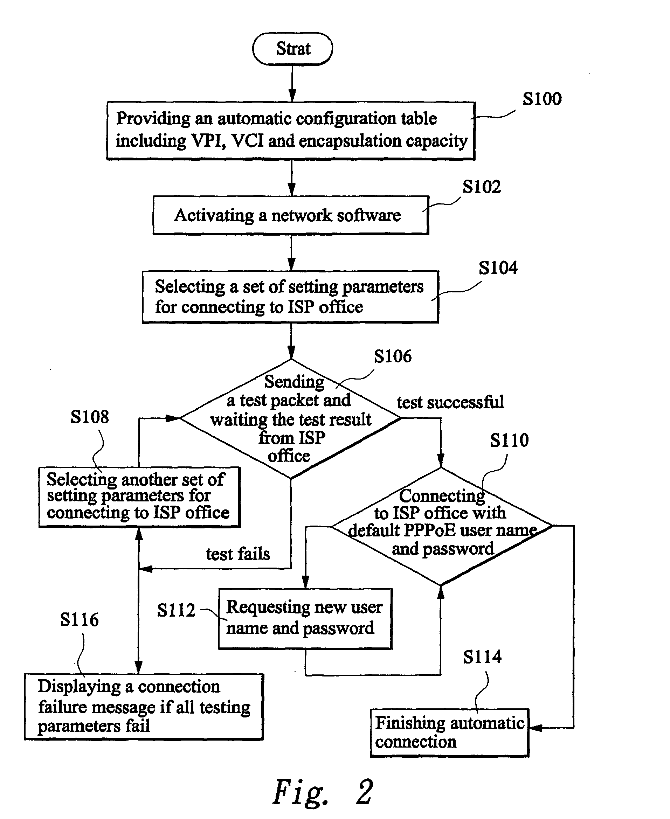

**Fig. 2** is a flowchart of setting-up method according to the present invention. Initially, an automatic configuration table is provided in the information device **30** in step **S100,** wherein the automatic configuration table comprises a plurality of setting parameters including VPI **31,** VCI **32** and encapsulation capacity **33** for a plurality of default ISP offices. More particularly, the setting parameters including VPI **31,** VCI **32** and encapsulation capacity **33** are stored in the automatic configuration table for potential ISP offices. The potential ISP offices include ISP offices in different cities like New York or DC, or in different countries like Taiwan or China. Therefore, the VPI /VCI setting parameters for New York, DC, Taiwan and China are stored in the automatic configuration table.

After the information device **30** according to the present invention is connected to a computer, and a network software such as a browser application, an e-mail application or other Internet application is activated, the information device **30** will dial up for connecting to the ISP office in step **S102.**

At this time, the information device **30** will select a set of setting parameters with response to the connected ISP office in step **S104.** The set of setting parameters include VPI, VCI and encapsulation capacity for connecting the ISP office.

The VPI and VCI parameters are used to fast determine packet transmission path and channel in ATM network and prevent redundant calculation of network layer. The encapsulation capacity parameter is used to determine the cell size in the ATM network.

Afterward, a connection-testing message is sent to user end. The user logs in the ISP office in the ATM network by the selected VPI, VCI and encapsulation capacity parameters and a test packet is sent to the ISP office. Afterward the user waits for the test result sent from ISP office in step **S106.**

If the test result fails, another set of setting parameter in the automatic configuration table is selected in step **S108** and the connection test repeats in step **S106** until the connection test is successful.

If the IPS site sends back a test message indicating that the selected VPI, VCI and encapsulation capacity parameters are correct for connection, a connection success message is sent to user computer and the VPI, VCI and encapsulation capacity parameters are reserved for further operation.

Afterward, a default usemame and a default password for PPPoE (Point to Point Protocol over Ethemet)/PPPoA (Point to Point Protocol over ATM) connection are sent to the ISP office in step **S110** for connection. If the connection fails, a message for requesting new user name and password is sent in step **S112.** After the user inputs his user name and password, the user name and password are saved as default value and PPPoE/PPPoA connection to ISP office is tried again in step **S110** by the saved user name and password. If the connection is successful, a message indicating successful setting and connection is sent to user computer in step **S114.**

In case that all set of setting parameters for VPI, VCI and encapsulation capacity parameters in the automatic configuration table cannot successfully make connection to ISP office, a connection failure message is sent to user end in step **S116.** The user can check network connection or find help from ISP administrator if the connection is failed.

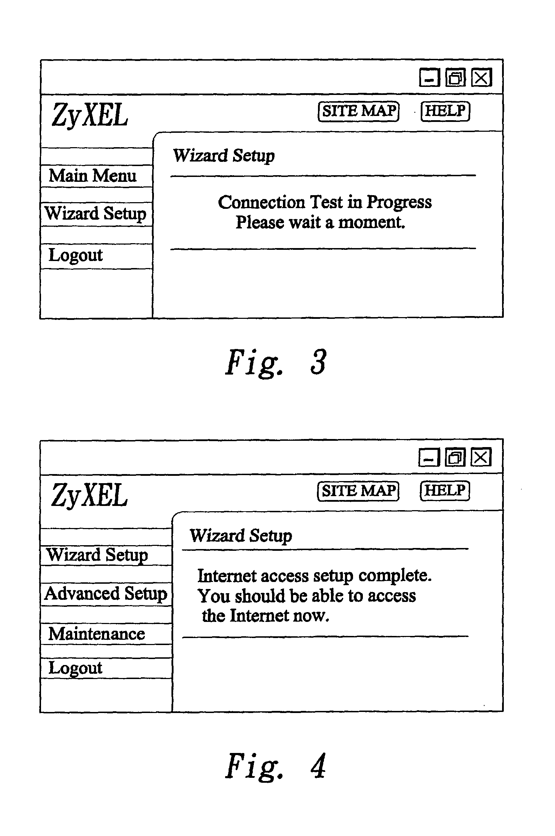

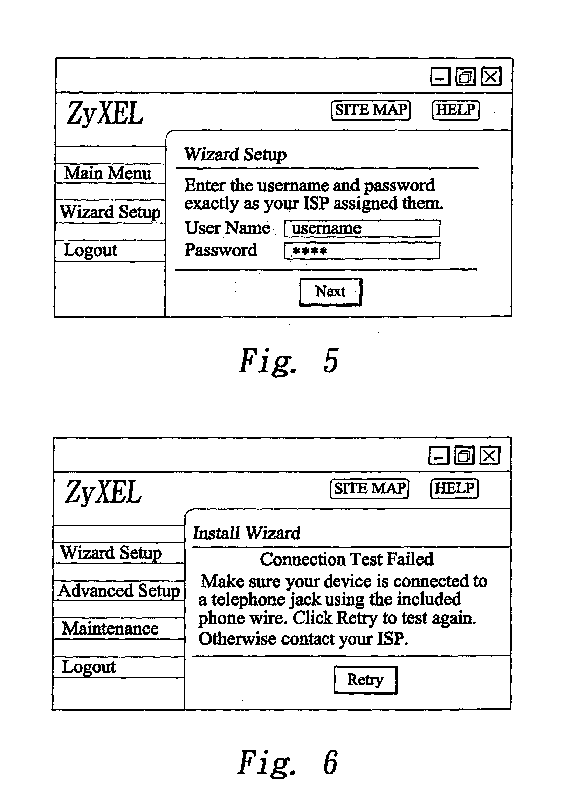

As can be seen from above description, there are four possible cases in the present invention:
**Case 1:** When user logs in for network connection, a connecting message is shown in computer monitor as shown in **Fig. 3.**
**Case 2:** In normal situation, the monitor shows successful login as shown in **Fig. 4** if the information device has successful automatic connection.
**Case 3:** If the automatic connection of the information device is finished but the user name/password is wrong for PPPoE/PPPoA connection, a screen requesting PPPoE/PPPoA setting appears on computer. The screen requests user to input user name/password again. When new user name/password is input and an execution key is pressed, the user name/password is saved and a connection test is tried. If the test fails, an error message is displayed and the screen requesting PPPoE/PPPoA setting appears again on computer. If the test successes, a screen indicating successful connection is displayed as shown in **Fig. 5.**
**Case 4:** A connecting failure screen is shown if the connection tests under all setting parameters have been conducted and connection still fails, as shown in **Fig. 6.** The connecting failure screen also asks user to check the connection of the information device and find help from ISP administrator.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. An automatic setting method for ATM network (10), the method used in an information device for automatic connecting to an ATM network (10) of an ISP office (20), the method comprising steps of:
providing an automatic configuration table including a plurality sets of setting parameters of virtual path identifier (VPI) (31)/virtual channel identifier (VCI) (32) and encapsulation capacity (33) for a plurality of default ISP offices (20);
connecting to the ISP office (20) by selecting one set of the setting parameters as connecting parameters to the ISP office (20); and
testing whether a connection to the ISP office (20) successes, and selecting another one set of the setting parameters as connecting parameters to the ISP office (20) when the connection fails until the connection to the ISP office (20) successes **characterized by** the steps of:
sending a default usemame and a default password for Point to Point Protocol over Ethernet/Point to Point Protocol over ATM connection hereinafter abbreviated as PPPoE/PPPoA connection to ISP office (20) when the test result from the ISP office (20) indicates successful connection;
sending a message requesting new user name and password if the PPPoE/PPPoA connection fails; and
saving the input user name and password as default value and reconnecting to the ISP office (20) by PPPoE/PPPoA connection with new default user name and password.

2. The automatic setting method for ATM network (10) as in claim 1,
wherein the information device is one of an xDSL modem, a router, gateway, an IP sharing and a wireless access point hereinafter abbreviated as WAP.

3. The automatic setting method for ATM network (10) as in claim 1,
wherein the ATM network (10) is an ATM WAN.

4. The automatic setting method for ATM network (10) as in claim 1,
wherein in the step of providing the automatic configuration table, the VPI (31) and VCI (32) parameters are used to fast determine packet transmission path and channel in ATM network (10) and prevent redundant calculation of network layer.

5. The automatic setting method for ATM network (10) as in claim 1,
wherein in the step of providing the automatic configuration table, the encapsulation capacity (33) parameter is used to determine a cell size in the ATM network (10).

6. The automatic setting method for ATM network (10) as in claim 1, further comprising a step before providing the automatic configuration table:
activating a network software for connecting to the ISP office (20).

7. The automatic setting method for ATM network (10) as in claim 6,
wherein the network software is one of a browser, e-mail software and a software for establishing network connection.

8. The automatic setting method for ATM network (10) as in claim 1, further comprising following steps after providing the automatic configuration table:
logging the ISP office (20) of the ATM network (10) by one set of setting parameters in the automatic configuration table;
sending a test packet containing the VPI (31), VCI (32) and encapsulation capacity (33) to the ISP office (20); and
waiting a test result from the ISP office (20).

9. The automatic setting method for ATM network (10) as in claim 8, further comprising a step before sending the test packet to the ISP office (20):
sending a connection test message to user.

10. The automatic setting method for ATM network (10) as in claim 1, further comprising a step after testing whether a connection to the ISP office (20) successes:
sending a connection success message to user when the test result from the ISP office (20) indicates successful connection.

11. The automatic setting method for ATM network (10) as in claim 1, further comprising a step:
sending a message indicating complete setting and successful connection to Internet.

12. The automatic setting method for ATM network (10) as in claim 1, further comprising following steps after testing whether a connection to the ISP office (20) successes:
sending a connection failure message to user when all set of setting parameters for VPI (31), VCI (32) and encapsulation capacity (33) parameters in the automatic configuration table cannot successfully make connection to ISP office (20); and
requesting user to check network connection or find help from ISP administrator.

## Patentansprüche

1. Automatisches Einstellverfahren für ein ATM-Netzwerk (10), wobei das Verfahren in einer Informationseinrichtung zum automatischen Verbinden mit einem ATM-Netzwerk (10) einer ISP-Vermittlungsstelle (20) verwendet wird, wobei das Verfahren Schritte aufweist des:
Bereitstellens einer Automatische-Konfiguration-Tabelle, die eine Mehrzahl von Sätzen von Einstellparametern des Virtueller-Pfad-Identifikators (VPI) (31)/ Virtueller-Kanal-Identifikators (VCI) (32) und der Kapselungskapazität (33) für eine Mehrzahl von voreingestellten ISP-Vermittlungsstellen (20) aufweist;
Verbindens mit der ISP-Vermittlungsstelle (20) durch Auswählen eines Satzes der Einstellparameter als Verbindungsparameter mit der ISP-Vermittlungsstelle (20); und
Prüfens, ob eine Verbindung mit der ISP-Vermittlungsstelle (20) erfolgreich ist, und Auswählen eines anderen Satzes der Einstellparameter als Verbindungsparameter mit der ISP-Vermittlungsstelle (20), wenn die Verbindung fehlschlägt, bis die Verbindung mit der ISP-Vermittlungsstelle (20) erfolgreich ist, **gekennzeichnet durch** die Schritte des:
Sendens eines voreingestellten Benutzernamens und eines voreingestellten Passwortes für die Punkt-zu-Punkt-Protokoll-über-Ethernet-/Punkt-zu-Punkt-Protokoll-über-ATM-Verbindung, nachstehend abgekürzt als PPPoE-/PPPoA-Verbindung, zu der ISP-Vermittlungsstelle (20), wenn das Prüfergebnis von der ISP-Vermittlungsstelle (20) eine erfolgreiche Verbindung anzeigt;
Sendens einer Mitteilung, die einen neuen Benutzernamen und ein neues Passwort anfordert, wenn die PPPoE-/PPPoA-Verbindung fehlschlägt; und
Speicherns des eingegebenen Benutzernamens und des eingegebenen Passwortes als Voreinstellung und erneuten Verbindens mit der ISP-Vermittlungsstelle (20) über die PPPoE-/PPPoA-Verbindung mit dem neuen voreingestellten Benutzernamen und dem neuen voreingestellten Passwort.

2. Automatisches Einstellverfahren für ein ATM-Netzwerk (10) gemäß Anspruch 1, wobei die Informationseinrichtung eine von einem xDSL-Modem, einem Router, einem Gateway, IP-Sharing und einem drahtlosen Zugangspunkt, nachstehend abgekürzt als WAP, ist.

3. Automatisches Einstellverfahren für ein ATM-Netzwerk (10) gemäß Anspruch 1, wobei das ATM-Netzwerk (10) ein ATM-WAN ist.

4. Automatisches Einstellverfahren für ein ATM-Netzwerk (10) gemäß Anspruch 1, wobei in dem Schritt des Bereitstellens der Automatische-Konfiguration-Tabelle die VPI (31)- und VCI (32)-Parameter verwendet werden, um den Paketübertragungspfad und -kanal in dem ATM-Netzwerk (10) schnell zu ermitteln und eine redundante Berechnung der Netzwerkschicht zu vermeiden.

5. Automatisches Einstellverfahren für ein ATM-Netzwerk (10) gemäß Anspruch 1, wobei in dem Schritt des Bereitstellens der Automatische-Konfiguration-Tabelle der Parameter der Kapselungskapazität (33) verwendet wird, um eine Zellengröße in dem ATM-Netzwerk (10) zu ermitteln.

6. Automatisches Einstellverfahren für ein ATM-Netzwerk (10) gemäß Anspruch 1, das ferner einen Schritt vor dem Bereitstellen der Automatische-Konfiguration-Tabelle aufweist:
Aktivieren einer Netzwerk-Software für das Verbinden mit der ISP-Vermittlungsstelle (20).

7. Automatisches Einstellverfahren für ein ATM-Netzwerk (10) gemäß Anspruch 6, wobei die Netzwerk-Software eine von einem Browser, einer e-Mail-Software und einer Software zum Aufbauen einer Netzwerkverbindung ist.

8. Automatisches Einstellverfahren für ein ATM-Netzwerk (10) gemäß Anspruch 1, das ferner folgende Schritte nach dem Bereitstellen der Automatische-Konfiguration-Tabelle aufweist:
Einloggen in der ISP-Vermittlungsstelle (20) des ATM-Netzwerkes (10) mit einem Satz von Einstellparametern in der Automatische-Konfiguration-Tabelle;
Senden eines Prüfpaketes, das den VPI (31), den VCI (32) und die Kapselungskapazität (33) enthält, an die ISP-Vermittlungsstelle (20); und
Warten auf ein Prüfergebnis von der ISP-Vermittlungsstelle (20).

9. Automatisches Einstellverfahren für ein ATM-Netzwerk (10) gemäß Anspruch 8, das ferner einen Schritt vor dem Senden des Prüfpaketes an die ISP-Vermittlungsstelle (20) aufweist:
Senden einer Verbindungstest-Mitteilung an den Benutzer.

10. Automatisches Einstellverfahren für ein ATM-Netzwerk (10) gemäß Anspruch 1, das ferner einen Schritt nach dem Prüfen, ob eine Verbindung mit der ISP-Vermittlungsstelle (20) erfolgreich ist, aufweist:
Senden einer Verbindungs-Erfolgsmitteilung an den Benutzer, wenn das Prüfergebnis von der ISP-Vermittlungsstelle (20) eine erfolgreiche Verbindung anzeigt.

11. Automatisches Einstellverfahren für ein ATM-Netzwerk (10) gemäß Anspruch 1, das ferner einen Schritt aufweist:
Senden einer Mitteilung, die das vollständige Einstellen und die erfolgreiche Verbindung mit dem Internet anzeigt.

12. Automatisches Einstellverfahren für ein ATM-Netzwerk (10) gemäß Anspruch 1, das ferner folgende Schritte nach dem Prüfen, ob eine Verbindung mit der ISP-Vermittlungsstelle (20) erfolgreich ist, aufweist:
Senden einer Verbindungs-Fehlermitteilung an den Benutzer, wenn alle Sätze von Verbindungsparametern für die Parameter des VPI (31), des VCI (32) und der Kapselungskapazität (33) in der Automatische-Konfiguration-Tabelle eine Verbindung mit der ISP-Vermittlungsstelle (20) nicht erfolgreich herstellen können; und
Auffordern des Benutzers, die Netzwerkverbindung zu prüfen oder Hilfe von einem ISP-Administrator zu bekommen.

## Revendications

1. Procédé de réglage automatique destiné à un réseau ATM (10), le procédé étant utilisé dans un dispositif d'information en vue d'une connexion automatique à un réseau ATM (10) d'un office ISP (20), le procédé comprenant les étapes consistant à:
fournir une table de configuration automatique comprenant une pluralité d'ensembles de paramètres de réglage d'un identifiant de trajet virtuel (VPI) (31)/d'un identifiant de canal virtuel (VCI) (32) et une capacité d'encapsulation (33) pour une pluralité d'office ISP par défaut (20);
effectuer une connexion à l'office ISP (20) en sélectionnant un ensemble de paramètres de réglage en tant que paramètres de connexion à l'office ISP (20) ; et
tester si une connexion à l'office ISP (20) fonctionne ou non, et sélectionner un autre ensemble de paramètres de réglage en tant que paramètres de connexion à l'office ISP (20) lorsque la connexion échoue, jusqu'à ce que la connexion à l'office ISP (20) réussisse, **caractérisé par** les étapes consistant à :
envoyer un nom d'utilisateur par défaut et un mot de passe par défaut pour une connexion par protocole de point à point sur Ethernet/protocole de point à point sur une connexion ATM, désignés ci-après par les abréviations PPPoE/PPPoA, à un office ISP (20) lorsque le résultat du test provenant de l'office ISP (20) indique une connexion réussie ;
envoyer un message demandant un nouveau nom d'utilisateur et un nouveau mot de passe si la connexion PPPoE/PPPoA échoue ; et
enregistrer le nom d'utilisateur saisi et le mot de passe saisi comme valeurs par défaut et se reconnecter à l'office ISP (20) avec la connexion PPPoE/PPPoA, avec le nouveau nom d'utilisateur et le nouveau mot de passe.

2. Procédé de réglage automatique destiné à un réseau ATM (10) selon la revendication 1, dans lequel le dispositif d'information est l'un parmi un modem xDSL, un routeur, une passerelle, un partage d'IP et un point d'accès sans fil, désigné ci-après par l'abréviation WAP.

3. Procédé de réglage automatique destiné à un réseau ATM (10) selon la revendication 1, dans lequel le réseau ATM (10) est un WAN ATM.

4. Procédé de réglage automatique destiné à un réseau ATM (10) selon la revendication 1, dans lequel, à l'étape consistant à fournir la table de configuration automatique, les paramètres de VPI (31) et de VCI (32) sont utilisés afin de déterminer rapidement un trajet et un canal de transmission de paquets sur le réseau ATM (10) et d'empêcher tout calcul redondant d'une couche réseau.

5. Procédé de réglage automatique destiné à un réseau ATM (10) selon la revendication 1, dans lequel, à l'étape consistant à fournir la table de configuration automatique, le paramètre de capacité d'encapsulation (33) est utilisé afin de déterminer une taille de cellule sur le réseau ATM (10).

6. Procédé de réglage automatique destiné à un réseau ATM (10) selon la revendication 1, comprenant en outre une étape avant de fournir la table de configuration automatique :
l'activation d'un logiciel de réseau en vue de la connexion à l'office ISP (20).

7. Procédé de réglage automatique destiné à un réseau ATM (10) selon la revendication 6, dans lequel le logiciel de réseau est l'un parmi un navigateur, un logiciel de messagerie électronique et un logiciel d'établissement d'une connexion réseau.

8. Procédé de réglage automatique destiné à un réseau ATM (10) selon la revendication 1, comprenant en outre les étapes suivantes, après avoir fourni la table de configuration automatique :
l'enregistrement de l'office ISP (20) du réseau ATM (10) à l'aide d'un ensemble de paramètres de réglage dans la table de configuration automatique ;
l'envoi d'un paquet de test contenant le VPI (31), le VCI (32) et la capacité d'encapsulation (33) à l'office ISP (20) ; et
l'attente d'un résultat de test de la part de l'office ISP (20).

9. Procédé de réglage automatique destiné à un réseau ATM (10) selon la revendication 8, comprenant en outre une étape avant l'envoi du paquet de test à l'office ISP (20) :
l'envoi d'un message de test de connexion à l'utilisateur.

10. Procédé de réglage automatique destiné à un réseau ATM (10) selon la revendication 1, comprenant en outre une étape après le test du fait qu'une connexion à l'office ISP (20) ait réussi :
l'envoi d'un message de réussite de connexion à l'utilisateur lorsque le résultat du test provenant de l'office ISP (20) indique une connexion réussie.

11. Procédé de réglage automatique destiné à un réseau ATM (10) selon la revendication 1, comprenant en outre une étape:
d'envoi d'un message indiquant une connexion complète et réussie à Internet.

12. Procédé de réglage automatique destiné à un réseau ATM (10) selon la revendication 1, comprenant en outre les étapes suivantes après le test du fait qu'une connexion à l'office ISP (20) ait réussi :
l'envoi d'un message d'échec de connexion à l'utilisateur lorsque tout ensemble de paramètres de réglage pour les paramètres de VPI (31), de VCI (32) et de capacité d'encapsulation (33) dans la table de configuration automatique ne peut assurer une connexion à l'office ISP (20) ; et
la requête à l'utilisateur de vérifier la connexion réseau ou de demander de l'aide auprès de l'administrateur de l'ISP.
